# NEW EUROPEAN PATENT SPECIFICATION

(11) **EP 3 380 295 B2**
(45) Date of publication and mention of the opposition decision: **09.11.2022**
(45) Mention of the grant of the patent: 22.01.2020
(21) Application number: 17733226.9
(22) Date of filing: 08.06.2017
(51) Int. Cl.: B29C 45/17

(54) **CABLE TRANSMISSION OF ACTUATOR CONTROL FOR INJECTION MOLDING SYSTEM**
KABELÜBERTRAGUNG EINER AKTUATORSTEUERUNG FÜR EINE SPRITZGIESSANLAGE
TRANSMISSION PAR CÂBLE DE COMMANDE D'ACTIONNEUR POUR SYSTÈME DE MOULAGE PAR INJECTION

(30) Priority: 09.06.2016 US 201662347811 P
(43) Date of publication of application: 03.10.2018
(73) Proprietor: Synventive Molding Solutions, Inc., Peabody, MA 01960 (US)
(72) Inventor: LEE, Christopher, Beverly MA 01915 (US); GALATI, Vito, Rowley MA 01969 (US)
(74) Representative: Fuchs Patentanwälte Partnerschaft mbB
(86) International application number: PCT/US2017/036542
(87) International publication number: WO 2017/214387

(56) References cited:
- EP-A1- 3 009 251
- EP-A2- 2 427 318
- WO-A1-01/60580
- WO-A1-96/27489
- DE-A1- 19 532 978
- GB-A- 1 118 692
- JP-A- 2004 209 955
- JP-U- S6 449 782
- JP-U- S59 186 564
- US-A1- 2003 057 607
- US-A1- 2010 285 170
- US-B1- 6 294 122
- US-B2- 9 144 929
- PETER UNGER: "Hot Runner Technology", Carl Hanser Verlag, Mod-Masters Limited, 2006, Munich, pages: 37
- FRENKLER ET AL.: "Hot Runners in Injection Moulds", 2001, Shawburg, pages: 13, 69

## Description

### BACKGROUND

Injection molding systems that use a controller that controls the opening and closing positions of hydraulic or pneumatic valve pin have been used. Such injection machine controlled systems are typically limited to mounting of an actuator on or to a heated manifold or an associated clamp plate or mount that is itself assembled with the heated manifold or such that the drive mechanism of the actuator is aligned with on in close physical proximity to the gate, nozzle or fluid flow channel leading to the gate.

EP 2 427 318 A2 discloses a coupler for coupling a pin head to an actuator, such as for coupling a valve pin to an actuator drive assembly in an injection molding machine. The coupler includes a cap secured to a head of the pin, and a housing forming an interior chamber in which the capped pin head is positioned, and a rolling mechanism allowing the capped pin head to move transversely in the interior chamber.

Further, US 2010/285170 A relates to a coupling assembly that provides mechanical and/or thermal isolation between a pin and an actuator for moving the pin. In a particular embodiment an apparatus and method are disclosed for coupling and decoupling of a valve pin assembly to an actuator in an injection molding apparatus.

WO 01/60580 A1 discloses an injection molding apparatus and system in which a rate of material flow during the injection cycle is controlled. According to one embodiment, an injection molding system is provided that includes an injection molding machine having a hydraulic power source, a manifold for distributing material injected from said injection molding machine to a plurality of gates leading to one or more mold cavities, and a controller to individually control respective rates at which material is injected through said gates during an injection cycle. The controller is coupled to the hydraulic power source and the hydraulic power source supplies hydraulic power to both the injection molding machine and to control said respective rates.

### SUMMARY

In accordance with the invention there is provided an injection molding apparatus (100) according to claim 1

### BRIEF DESCRIPTION OF THE DRAWINGS

The foregoing and other objects, features, and advantages of the present disclosure set forth herein will be apparent from the following description of particular embodiments of those inventive concepts, as illustrated in the accompanying drawings. Also, in the drawings the like reference characters refer to the same parts throughout the different views. The drawings depict only typical embodiments of the present disclosure and, therefore, are not to be considered limiting in scope.
- FIG. 1 is a perspective view of an IMM with rotational cables and electic actuators controlling valve pins.
- FIG. 2 is a schematic view of a first embodiment of rotary cable and electric actuator system.
- FIG. 3 is a cross-sectional view of one of the rotary to linear converters interconnected to one of the actuators of Figs. 1 and 2.
- FIG. 4 is a cross-sectional view taken along line 4-4 of Fig. 3.
- FIG. 5 is a partially broken away perspective view of one of the rotary to linear converters interconnected to one of the actuators of Figs. 1-4.
- FIG. 6 is a fragmentary perspective view of the cable connectors of Figs 1 and 2.
- FIG. 7 is a schematic cross-sectional view of the rotary to linear converter interconnected to one of the actuators of Fig. 2 in a fully closed valve pin position.
- FIG. 8 is a schematic cross-sectional view similar to Fig. 7 but showing the valve pin in a fully open position.
- FIG. 9 is a top plan view of the cable connectors of Fig. 6 in a disconnected position.
- FIG. 10 is a fragmentary plan view of an alternative embodiment of quick disconnect.
- FIG. 11 is a fragmentary plan view of an alternative embodiment of quick disconnect.
- FIG. 12 is a cross-sectional side view of an alternative embodiment of a rotary to linear converter interconnected to a rotating cable driven by rotary electric actuator.
- FIG. 13 is a cross-sectional view of an alternative embodiment of a rotary to linear converter comprising abevel gear driving a nut that drives a screw.
- FIG. 14 is a sliding spline in key way that prevents rotation of threaded post and valve pin.
- FIG. 15 is a partially broken away schematic perspective view of an alternative embodiment hypoid gear rotary to linear converter interconnected to a rotary electric actuator.
- FIG. 16 is a partially broken away schematic perspective view of an alternative embodiment worm gear rotary to linear converter interconnected to rotary electric actuator.
- FIG. 17 is a schematic view of an alternative embodiment of a linearly driven push/pull cable and rotary electric actuator system where the interconnection of the rotary electric motor of the actuator to the elongated cable includes a ball screw that converts rotary motion of the electric motor to linear motion of the elongated cable.
- FIG. 18 is a cross-sectional view of one of the push/pull actuators of Fig. 17.
- FIG. 19 is a partially broken away perspective view of the actuator of Fig. 18.
- FIG. 20 is a fragmentary perspective view of the cable connections of Fig. 17.
- FIG. 21 is an exploded perspective view of the cable terminals of Fig. 20.
- FIG. 22 is a schematic of a generic rotational speed changing or torque changing assembly.
- FIGs. 23A -23C are examples of alternative gear assemblies for changing rotational speed or torque of a rotary actuator.

### DETAILED DESCRIPTION

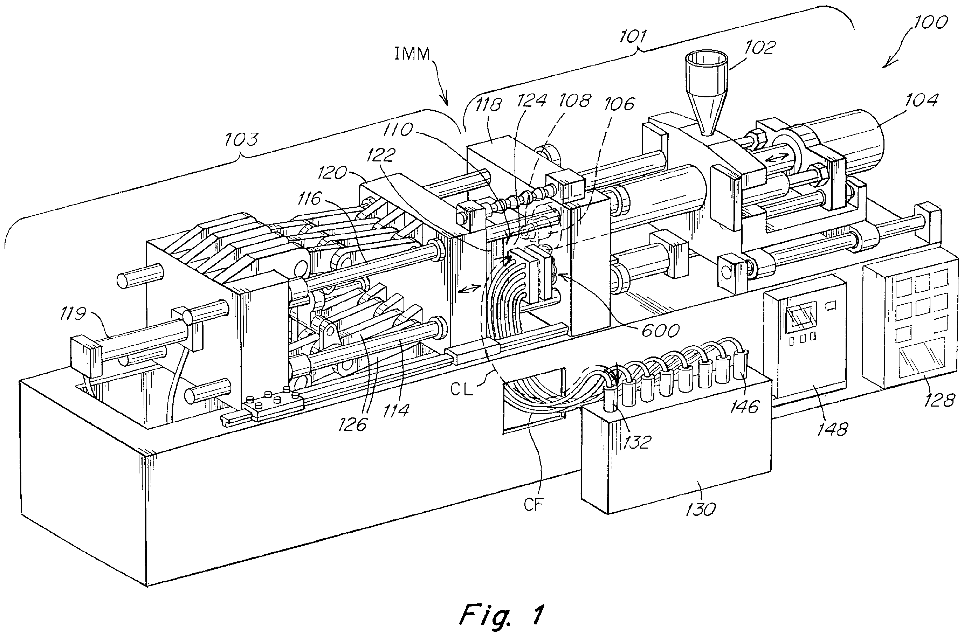

FIG. 1 provides a perspective view of an injection molding apparatus 100 comprised of an injection molding machine (referred to herein as "IMM") that may be used to automatically produce molded objects or articles by injecting an injection fluid (e.g., a heated polymer), at high pressure, into a mold, where the injection fluid cools and solidifies into a hardened object. The IMM may be generally divided into two portions: an injection unit 101 and a clamping unit 103.

The injection unit 101 includes a hopper 102, a screw motor 104 for driving a reciprocating screw (not shown), a barrel assembly 106, an injection nozzle 108, and a mold 110, which, generally speaking, is a type of heat exchanger that enables a fluid injected into the mold to solidify to a desired shape and dimensional details of a cavity defined within the mold 110. Thus, the injection unit 101 functions inject or otherwise provide an injection fluid into a mold 110.

In particular, an injection fluid, such as plastic, is introduced from the hopper 102 and accumulated into the barrel assembly 106 in front and/or surrounding the reciprocating screw. The screw motor 106 drives the reciprocating screw and thereby forces the injection fluid through the barrel assembly 104 and into the injection nozzle 108. The injection nozzle 108 connects the barrel assembly 106 to the mold 110, thereby allowing the injection fluid to flow under pressure from the barrel assembly 106 through the injection nozzle 108 and into the cavity of the mold 110, where the injection fluid solidifies.

The clamping unit 103 applies a clamping force to hold two halves of the mold 110 in proper alignment and thereby keep the mold 110 closed in a manner sufficient to resist the injection force and/or pressure generated during injection of injection fluid into the cavity of the mold 110. As illustrated, the clamping unit 103 includes one or more tie bars 114-116, a stationary platen 118, a movable platen 120, and molding plates 122-124 that house the mold 110 (i.e., the mold cavity).

A cylinder 119 may be actuated to open/close (i.e., clamp) the mold 110 at appropriate times. Once the mold 110 is clamped, injection fluid is injected, at high pressure, into the cavity of the mold 110 using the injection unit 101. During such an injection process, a sufficiently strong clamping force is applied by the clamping unit 103 so that the mold 110 may not be opened (e.g., by the pressure of the injection). To amplify the clamping force, one or more toggle links 126 are used. The toggle links 126 are coupled to the movable platen 120, wherein the toggle links 126 are advanced or retracted by a ball screw rotationally driven by the cylinder 119 to generate a clamping force.

The IMM and system 100 may be automated and/or otherwise controlled by an IMM controller 128, which functions to automate and monitor various processes and process conditions for controlling the quality and consistency of injection-molded objects generated by the IMM 100. For example, the IMM controller 128 may generate drive signals that control moving speed of the screw motor 106 and/or the injection speed of injection fluid into the cavity of the mold 110. Additionally, the IMM controller 128 may control the amount of pressure applied during injection into the cavity of the mold 110. The IMM controller 128 may include one or more processors that process software or other machine-readable instructions and may include a memory to store the software or other machine-readable instructions and data.

An electric actuator power unit (EAPU) 130 houses a plurality of electric rotary actuators 132-146, each of which produce a continuous rotary motion or torgue. The EAPU 130 is controlled by a controller 132 that provides the necessary electrical elements for controlling the function of the EAPU and the rotary actuators 132-146.

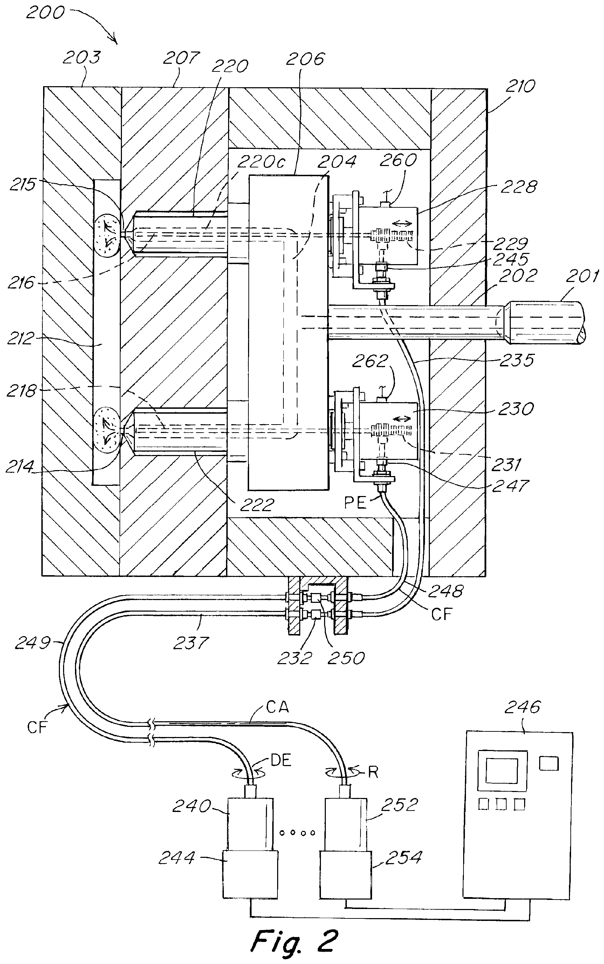

Fig. 2 illustrates one example embodiment of the mold 110, implemented as a multi-gate single cavity molding system 200. Although a multi-gate single-cavity system is illustrated, it is contemplated that other, multi-cavity systems could be used. As illustrated, the system 200 includes an injection nozzle 201 (e.g., similar to the injection nozzle 108) that feeds an injection fluid into an inlet 202 which, in turn, feeds into a distribution channel 204 of a hot runner manifold 206 that controls the flow of injection fluid into a cavity 212 (where the object is formed from the injection fluid) defined within two mold halves 203 and 207. The hot runner manifold 206 is disposed between an upstream clamp plate 210 and a downstream mounted mold, illustrated by the mold halves 203 and 205. The injection fluid is routed into the cavity 212 via downstream gates 214 and 215.

Valve pins 216 and 218 are used to control the rate of the flow of injection fluid provided to the gates 214 and 215. In one embodiment, valve pin 216 may be movable along its X-axis within a nozzle 220 having a flow channel 220c, which leads to the gate 215. Similar to valve pin 216, valve pin 218 is movable along its X-axis within a nozzle 222, which leads to gate 214. Moving valve pin 216 and/or valve pin 218 allows valve pin 216 and/or valve pin 218 to be positioned in an open position or a closed position. For example, valve pin 216 and/or valve pin 218 may be completely opened at the beginning of the injection cycle and completely closed at the end of the injection cycle. Between the fully open and fully closed positions, the valve pin 216 and/or valve pin 218 may assume intermediate positions between the fully open and closed positions, in order to variably decrease or increase the rate of flow of the injection fluid entering the cavity 212.

The valve pins 216 and 218 are coupled to rotary-to-linear motion converter mechanisms ("RTLM") 228 and 230, respectively, both of which convert rotational motion into linear motion. In the illustrated view of Fig. 2, only two RTLM assemblies are shown for the sake of simplicity; it is contemplated, however, that any number of RTLM assemblies could be provided.

In one embodiment, each of the RTLM 228 and 230 may include a housing containing a rack and pinion actuator, which is a specific type of linear actuator that includes a pair of gears (illustrated at 229 and 231) for converting rotational motion into linear motion. A circular gear referred to as a "pinion" engages teeth on a linear gear referred to as a " rack". Rotational motion applied to the pinion caused the rack to move relative to the pinion, thereby translating the rotational motion of the pinion into linear motion.

The RTLM 228 is connected to a connector 231 that is coupled to a proximal end of a first flexible cable 235. The first flexible cable 235 is a relatively short cable of less than or equal to about 1 foot in length. The first flexible cable 235 includes a distal end interconnected to a distal end of a second flexible cable 237 via a cable coupling 232. The second flexible cable 237 typically comprises a relatively long cable between about .5 and 10 feet in length. The long flexible cable 237 is coupled at a proximal end to a rotary actuator 240 that produces a rotary motion or torque, driven by an electric motor 244 controlled by a controller 246 (e.g., similar to the controller 132 of Fig. 1).

The rotary actuator 240, 252 typically comprising a rotor of an electric motor 244, 254 is mounted in a location that is remote from the hot runner manifold 206 with the rotary actuator 240 remaining interconnected to the valve pin 216 via the first flexible cable 235 and second flexible cable 237. Stated differently, a housing that houses the connection between the RTLM 228 and proximal end of the first flexible cable 235 is mounted to the hot runner manifold 206, while the rotary actuator 240 and the electric motor 244 is mounted elsewhere in a location that is remote from hot runner manifold 206, such as for example, mounted on a top clamp plate, and not in heat conductive communication with the hot runner manifold 206.

Similar to the RTLM 228, the RTLM 230 is connected to a connector 247 that is coupled to a proximal end of a first flexible cable 248. The first flexible cable 248 is a relatively short cable of less than or equal to about 1 foot in length. The first flexible cable 248 includes a distal end interconnected to a distal end of a second flexible cable 249 via a cable coupling 250. The second flexible cable 249 typically comprises a relatively long cable between about .5 and 10 feet in length. The second flexible cable 249 is coupled at a proximal end to a rotary actuator 252 that produces a rotary motion or torque typically driven by the rotor of an electric motor 254 controlled by a controller 246 (e.g., similar to the controller 132 of Fig. 1).

The rotary actuator 252 and the electric motor 254 is mounted in a location that is remote from the hot runner manifold 206 with the rotary actuator 252 remaining interconnected to the valve pin 218 via the first flexible cable 248 and second flexible cable 249. Stated differently, a housing that houses the connection between the proximal end of the first flexible cable 248 is mounted to or in close adjacency and heat communication with the hot runner manifold 206, while the rotary actuator 252 and/or the electric motor 254 is mounted elsewhere in a location that is remote from the hot runner or manifold 206, such as for example, mounted on a top clamp plate, and is not in heat conductive communication with the hot runner or manifold 206.

All flexible cables described herein such as cables 235, 237, 248, 249 are elongated such that the rotary actuator to which the cables are interconnected are mountable in a location that is remote from and not in significant heat conductive communication with the hotrunner or heated manifold 206. And all flexible cables described herein are flexible such that they are bendable along their axes CA and can be formed into a curved or curvilinear configuration CF at one more locations along the length of their axis CA enabling the flexible cables to be readily routed between a rotary actuator that is remote from the heated manifold 206 and an RTLM or valve pin as described herein that is mounted in relatively close adjacency or heat communication with the manifold 206.

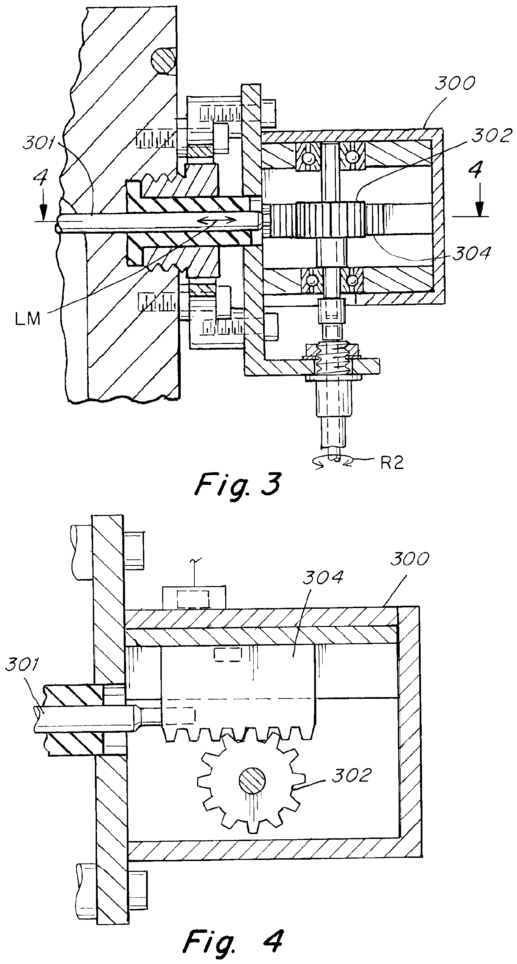

Hall effect sensors, illustrated at 260 and 262, may be coupled to the RTLMs 228 and 230. The hall effect sensors 260 and 262, 710, 810 Figs. 2, 4, 7, 8 may be used to detect the linear position of the valve pin or linearly moving component of the RTLM by detecting the strength, degree, and quality of a magnetic field generated by a magnet 706, 806 mounted or coupled to a linearly moving component of RTLMs 228 and 230 such as the gear rack 304, 504, 704, 804, Figs. 4, 5, 7, 8. The strength, degree, and quality of the magnetic field varies depending on the precise position of the linearly moving component and associated magnets relative to the sensors 260 and 262. Thus, when a magnet spatially moves in position relative to the sensor 260, the sensor 260 detects a magnetic field having a strength or degree that is specific to the precise position of the magnet to the sensor 260. Similarly, when a magnet spatially moves in position relative to the sensor 262, the sensor 262 detects a magnetic field having a strength or degree that is specific to the precise position of the magnet to the sensor 250. Such variation in the detected strength, degree, or quality of magnetic field generated by the magnets can be correlated to the precise position of the linearly driven component of the RTLM such as gear rack 304, 504 and any interconnected valve pins 216, 218, 301, 501, 708, 808. Thus, the hall effect sensors 260 and 262 can be used to detect when the valve pins 216 and 218 are opened or closed and detect all linear positions between fully open and fully closed. Such linear position signals can be input to a controller (not shown) that can be programmed to control the operation of the electric actuators according to a predetermined profile of valve pin positions.

Fig. 3 provides an illustration of a cross-sectional view of an RTLM (e.g. the RTLM 228 and 230), implemented as a rack and pinion actuator, as generally described in Fig. 2. In the illustrated view, a valve pin 301 is operatively coupled to the RTLM 300, which includes a circular gear 302 referred to as a "pinion" that engages teeth on a linear gear bar 304 referred to as a "rack". Rotational motion is applied (e.g., via the rotary actuators connected to the first and second flexible cables generally described in Fig. 2) to the circular gear pinion 302, which causes the gear bar rack 304 to move relative to the circular gear pinion 302, thereby translating the rotational motion of the circular gear pinion 302 into linear motion. Stated differently, the circular gear pinion 302 is drivably rotatable to cause, via engagement with teeth of the gear bar rack 304, linear back and forth movement of the gear bar rack 304 and its interconnected valve pin 301. Fig. 4 provides an illustration of a cross-sectional view of the actuator 300 of Fig. 3 taken along line 4-4 of Fig. 3. In such a view, the circular gear pinion 302 engages teeth on the linear gear bar rack 304. In the illustrated view, the value pin 301 is shown in a partially open position. Thus, the circular gear pinion 302 was rotated in a manner that caused the valve pin 301 to be in a partially open position.

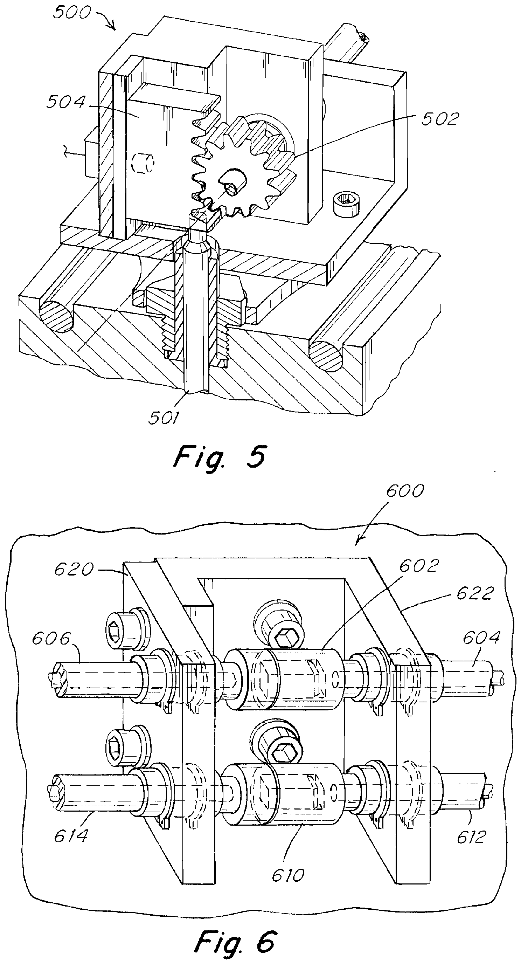

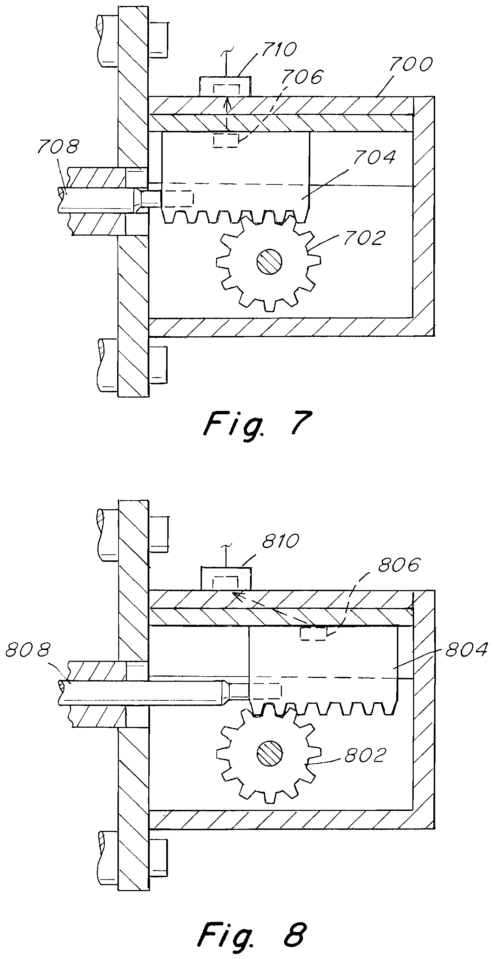

Fig. 5 provides a partially broken away perspective view 500 of the RTLMs of Figs. 3-4. The illustrated embodiment includes an actuator 500 generally comprising a valve pin 501 coupled to the actuator 500, which includes a circular gear pinion 502 including projecting teeth that engages the teeth on the linear gear bar rack 504. Referring ahead to Figs. 7 and 8, schematic views of a cross-sectional view of the RTLM of Figs. 3-5 in a fully closed valve pin position are provided. In the illustrated schematic of Fig. 7, an RTLM 700, including a circular gear pinion 702 and a linear gear bar rack 704 are in a position where a magnetic field generated by a magnet 706 is strong, indicating to a hall effect sensor 710 that a valve pin 708 is in a closed position. Alternatively, in the illustrated schematic of Fig. 8, an RTLM 800, including a circular gear pinion 802 and a linear gear bar rack 804 are in a position where a magnetic field generated by a magnet 806 is weak, indicating to a hall effect sensor 810 that a valve pin 808 is in a closed position.

Referring back to Fig. 6, a perspective view is provided of the cable couplings connecting first flexible cables to second flexible cables and thereby connecting rotary actuators to RTLMs, as shown in Figs. 1 and 2 (only two couplings are shown for simplicity). As illustrated, a coupling 602 is shown as a square drive connector, however, it is contemplated that a hex connector, spline connector, keyed connector, and/or the like could be used. The coupling 602 is connected to a distal end of a first flexible cable 604 (e.g., short flexible cable) and a distal end of a second flexible cable 606 (e.g., long flexible cable). Similarly, a coupling 610 is connected to a distal end of a first flexible cable 612 (e.g., short flexible cable) and a distal end of a second flexible cable 614 (e.g., long flexible cable). The couplings 602 and 604 are adapted to accommodate rotational movement and torgue generated by rotary actuators (not shown) connected to the proximal ends of the second flexible cables 606 and 614.

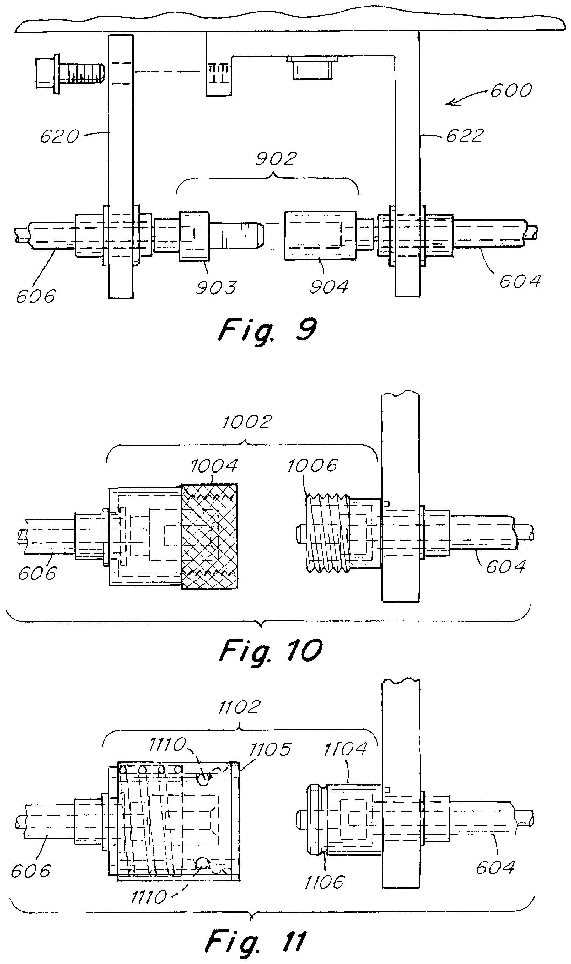

Fig. 9 provides an illustration of the cable couplings of Fig. 6 in a disconnected position. A coupling 902 and/or 904 includes a first connector housing 902 having an engaging portion and a second connector housing 904 having a cavity portion for receiving the engaging portion of the first connector housing 902. Fig. 10 provides another embodiment of the cable the cable couplings of Fig. 6. In the embodiment of Fig. 10, a coupling 1002 is shown as a screw fitting type connector. Accordingly, the screw fitting type connector includes a first connector housing 1004 having a screw type engaging portion and a second connector housing 1006 having a cavity portion for receiving the screw type engaging portion.

Fig. 11 is yet another embodiment of the cable couplings of Fig. 6. In the embodiment of Fig. 11, a coupling 1102 is shown as a quick disconnect coupling. Accordingly, the quick disconnect coupling includes a first connector housing 1104 having an engaging portion with spring loaded ball dents (illustrated at 1106 and 1108) and a second connector housing 1105 having a cavity portion for receiving the engaging portion of the first connector housing 1104. The second connector housing 1105 contains one or more balls or spheres 1110 and 1112 that engage the spring loaded ball dents of the engaging portion 1104, thereby securing the first connector 1104 to the second connector housing 1105.

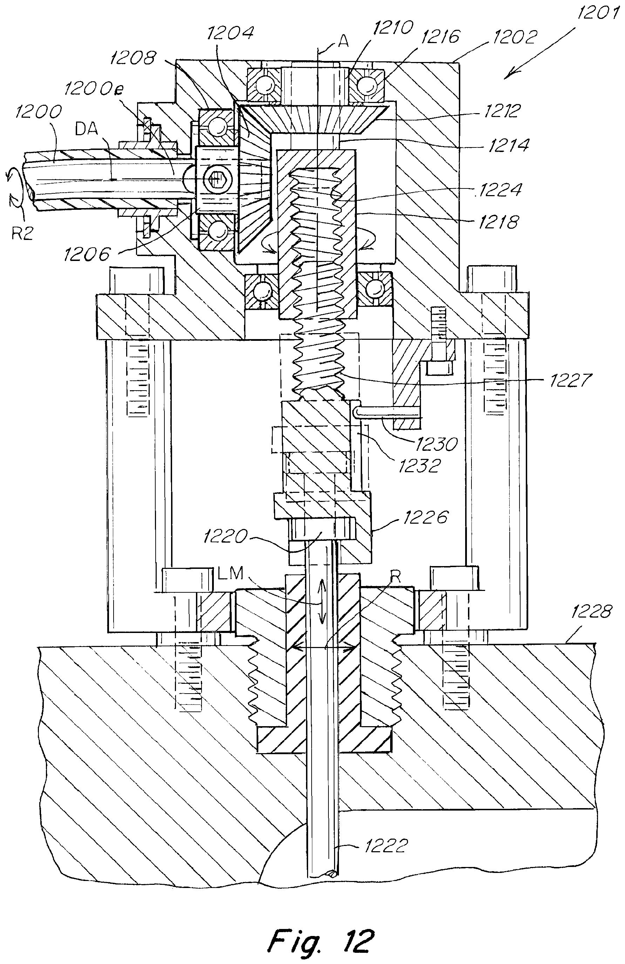

Fig. 12 illustrates a cross-sectional view of an alternate embodiment of the RTLMs illustrated in Fig. 2. As illustrated, a downstream end of an elongated shaft 1200 is coupled to another type of RTLM 1201. The elongated cable or shaft 1200 is coupled to the bevel gear 1204 using a set screw that clamps the bevel gear 1204 to a flat surface on the cable end1200e. The RTLM 1201 includes a housing 1202 that houses a bevel gear 1204 that has a gear shaft 1206 coupled to the elongated shaft 1200 and mounted to housing 1202 by bearings 1208 and 1210 for rotation R2 in unison with the shaft 1200. Rotation of the shaft portion 1206 drivably rotates the bevel gear 1204. Bevel gear 1204 is meshed with complementary bevel gear 1212 that is rotatably mounted to the housing 1201 via screw shaft 1214 that is rotatably mounted to housing 1201 via bearings 1216 and 1217. As shown, the bevel gears 1204 and 1212 and their respective shafts 1201 and 1214 are configured and arranged to transmit rotation around elongated shaft axis DA to a valve pin drive axis A that is non coaxial with axis DA. Driven rotation of bevel gear 1204 results in driven rotation of screw shaft 1214 that is screwably engaged with linearly travelling elongated nut 1218 which is in turn coupled to the head 1220 of valve pin 1222 (i.e., the elongated nut 1218 is driven by the bevel gears). Thus driven rotation of screw shaft 1214 results in rotation of screw threads 1224 that in turn results in linear driven movement along axis A of nut 1218 and its interconnected valve pin 1222. The head 1220 of pin 1222 is coupled to the downstream coupling end 1226 of shaft 1218. The coupling 1226 and head 1220 are adapted to enable the pin 1222 to travel radially R relative to travel axis A to allow for radial movement R of pin1222 that can occur upon thermal expansion a manifold 1228 in which pin 1222 is mounted downstream. An anti-rotation pin 1230 slides in a keyway 1232 to prevent pin 1222 from rotating around its axis.

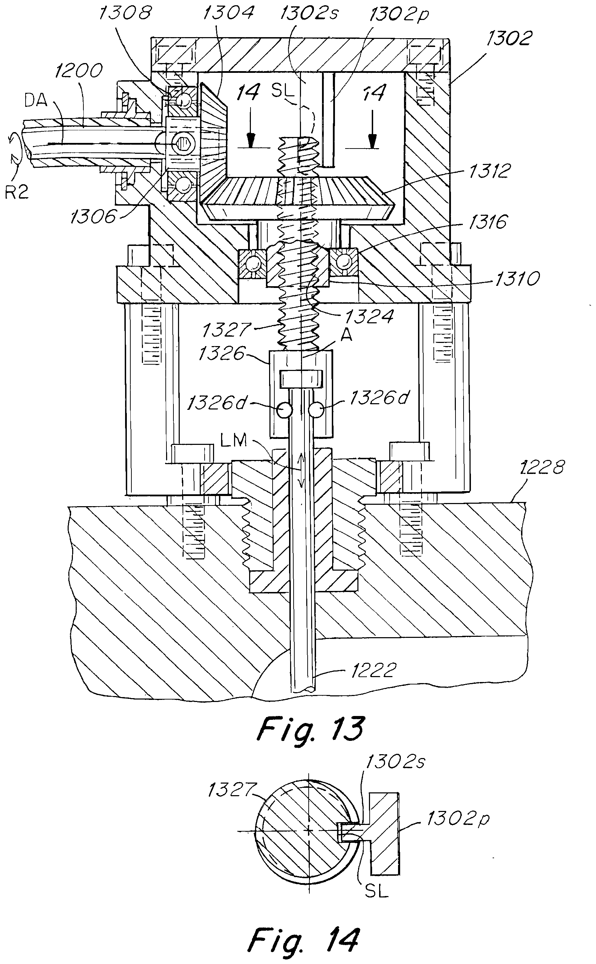

Fig. 13 provides an cross-sectional view of an alternative embodiment of bevel gears and nut(s) of the RTLM of Fig. 12. In particular, the RTLM of Fig. 13 is the same as the RTLM of Fig. 12 except that the bevel gears and nuts are in a different orientation than the bevel gears and nut(s) of Fig. 12. In the illustrated embodiment of Fig. 13, a bevel gear 1304 is mounted to the housing 1202 by bearings 1306 and 1308. The bevel gear 1304 is meshed with complementary bevel gear 1306 that is rotatably mounted to the housing 1201 via via bearings 1216 and 1217.

Fig. 14 shows a cross section along lines 14-14 of Fig. 13 showing a slot SL drilled axially along screw 1224 into the teeth of the screw 1224 with a stationary spline 1202s being slidably disposed with the slot SL to prevent the screw 1224 from rotating, the spline 1202s extending from a stationary post 1202p attached to the top clamp plate 1202. The screw 1224 is screwably engaged with bevel gear 1306 and is driven linearly LM along its axis by driven rotation of bevel gear 1306. As shown screw 1224 is attached to a pin coupler such that the valve pin 1222 is driven linearly LM in unison with the screw 1224.

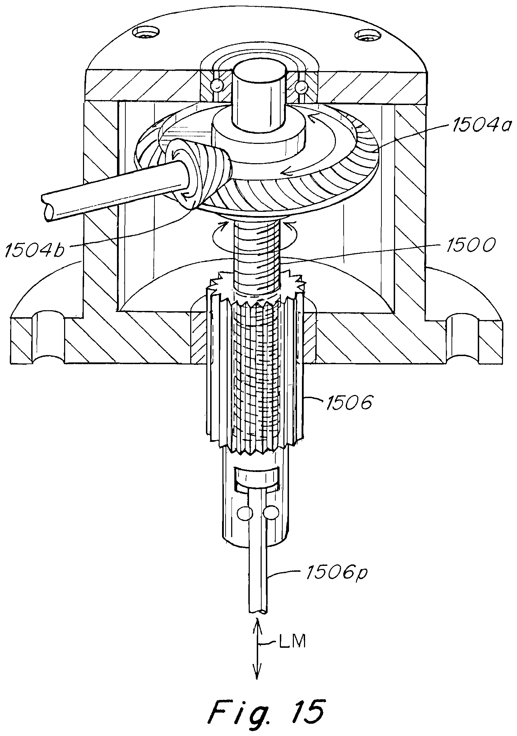

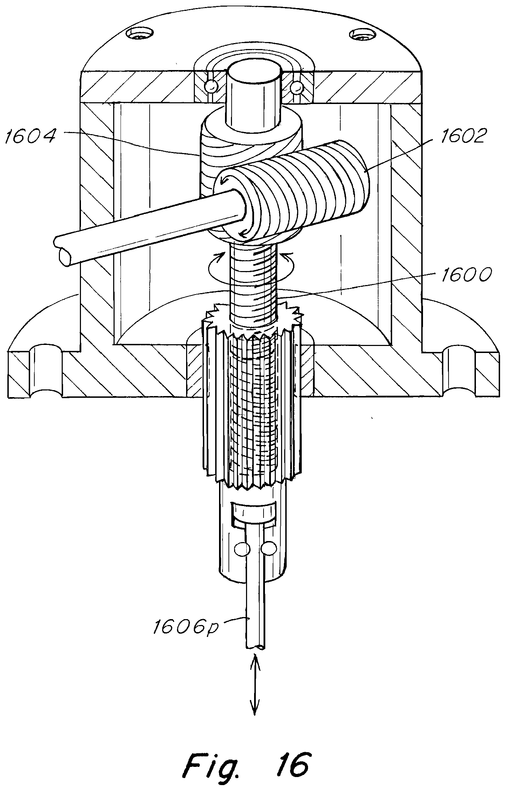

Figs. 15 and 16 partially broken away schematic perspective view of alternate embodiment of the types of gears that may be included in the RTLM of Fig. 12. In the illustrated embodiment of Fig. 15, a threaded shaft 1500 (e.g., similar to the threaded shaft 1218) is attached or otherwise coupled to beveled hypoid gears 1504(a) and 1504(b), shaped as a revolved hyperboloid instead of conical shape. The rotatably driven shaft 1500 is threadably engaged with a threaded follower nut 1506. Splines are providedon the folio threaded follower nut 1506 to prevent the follower nut 1506 and its interconnected valve pin 1506p from rotating. In the illustrated embodiment of Fig. 16, a threaded shaft 1600 (e.g., similar to the threaded shaft 1218) is coupled to a worm gear, which is a gear arrangement in which a gear in the form of a screw 1602 (referred to as a worm) meshes with a cylindrical gear 1604 with teeth projecting radially (referred to as a worm gear). Similar to Fig. 15, a shaft 1600 is threadably engaged with a follower nut 1606 that is driven linearly together with its interconnected valve pin 1606p. Splines 1606 on the threaded shaft 1600 prevent rotation of the threaded follower nut and valve pin.

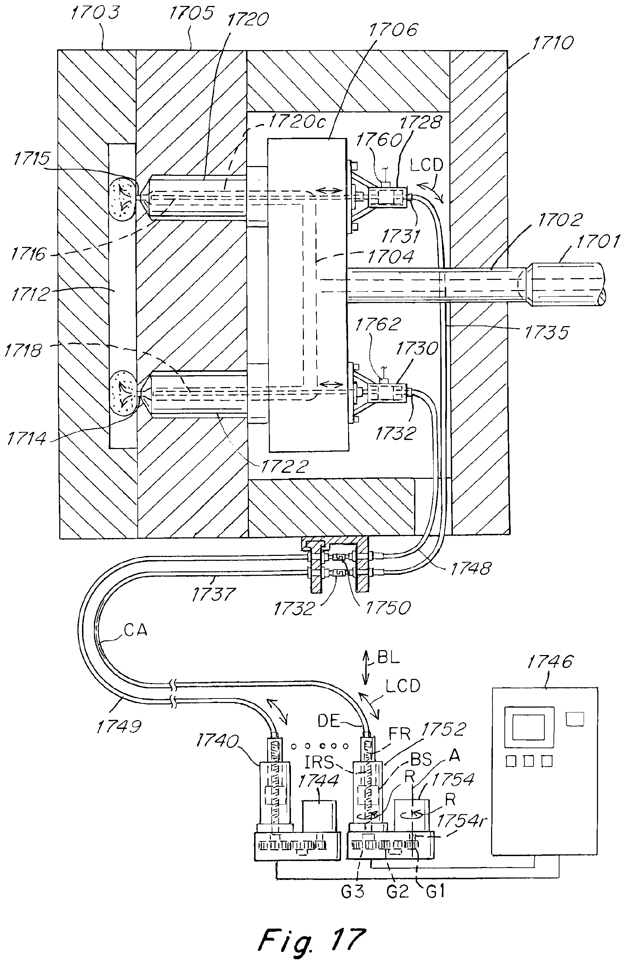

Figs. 17-21 illustrate an embodiment of an elongated flexible cable drive system not falling under the invention. As shown in Figs. 17-21 a push/pull cable and actuator system is assembled where the rotatably driven R rotor component 1754r of a rotary actuator 1754 is directly rotatably interconnected to a ball screw BS via meshed gears G1, G2. Gear G2 is rigidly connected to a threaded screw shaft IRS which is rotatably driven R together with gears G1 and G2. Threaded screw shaft IRS is screwably engaged with ball screw BS which is interconnected to a follower FR which is driven along a linear path of travel or linearly BL by the rotation drive R of shaft IRS and rotor 1754r. The distal end DE of a flexible elongated cable 1737 is attached to the follower FR thus causing the cable 1737 and its interconnected upstream cable 1735 to be driven linearly LCD along the axis CA of the cables 1735, 1737. The linear drive of the cables LCD is transferred to the valve pin 1716 via its interconnection to the proximal end PE of the linearly driven LCD flexible cable 1735. Thus the ball screw BS converts the rotary motion R of the actuators 1744, 1754 to linear drive motion LCD, LM at a position or location remote from the heated manifold 1706 as opposed to the RTLMs described in other embodiments where the RTLMs are mounted in close proximity and heat conductive communication with the heated manifold 206.. As illustrated, a machine barrel1701 (e.g., similar to barrel 108) feeds an injection fluid into an inlet 1702 that, in turn, feeds into a distribution channel 1704 of a hot runner manifold 1706 that controls the flow of injection fluid into a cavity 1712 (where the object is formed from the injection fluid) defined within two mold halves 1703 and 1707. The hot runner manifold 1706 is disposed between an upstream clamp plate 1710 and a downstream mounted mold, illustrated by the mold halves 1703 and 1705, both of which form the cavity 1712. The injection fluid is routed into the cavity 1712 via downstream gates 1714 and 1715.

Valve pins 1716 and 1718 are used to control the rate of flow of the injection fluid provided to the gates 1714 and 1715, respectively. In one embodiment, valve pin 1716 may be movable along its X-axis within a nozzle 1720, which leads to the gate 1715. Similar to valve pin 1716, valve pin 1718 is movable along its X-axis within a nozzle 1722, which leads to gate 1714. Moving valve pin 1716 and/or valve pin 1718 allows valve pin 1716 and/or valve pin 1718 to be positioned in an open position or a closed position. For example, valve pin 1716 and/or valve pin 1718 may be completely opened at the beginning of the injection cycle and completely closed at the end of the injection cycle. Between the fully open and fully closed positions, the valve pin 1716 and/or valve pin 1718 may assume intermediate positions between the fully open and closed positions, in order to variably decrease or increase the rate of flow of the injection fluid entering the cavity 1712.

The valve pins 1716 and 1718 are coupled to push/pull actuators 1728 and 1730, respectively (it is contemplated that other types of linear actuators may be used). In the illustrated view of Fig. 2, only two push/pull actuators are shown for the sake of simplicity; it is contemplated, however, that any number of actuators could be provided.

The push/pull actuator 1728 is connected to a connector 1731 that is coupled to a proximal end of a first flexible cable 1735. The first flexible cable 1735 is a relatively short cable of less than or equal to about 1 foot in length. The first flexible cable 1735 includes a distal end interconnected to a distal end of a second flexible cable 1737 via a cable coupling 1732. The second flexible cable 1737 typically comprises a relatively long cable between about .5 and 10 feet in length. The second flexible cable 1737 is coupled at a proximal end to a ball screw linear actuator 1740 that generates linear motion, driven by an electric motor 1744 controlled by a controller 1746 (e.g., similar to the controller 132 of Fig. 1). Stated differently, the rotary motion generated by the electric motors 1744 is converted into linear motion by the ball screw linear actuator 1728. In the illustrated embodiment, ball screw linear actuator 1740 and the electric motor 1744 is mounted in a location that is remote from the hot runner manifold 1706 with the rotary actuator 1740 remaining interconnected to the valve pin 1716 via the first flexible cable 1735 and second flexible cable 1737. Stated differently, a housing that houses the connection between the push/pull actuator 1728 and the proximal end of the first flexible cable 1735 is mounted to the hot runner manifold 1706, while the ball screw linear actuator 1740 and the electric motor 1744 is mounted elsewhere in a location that is remote from hot runner manifold 1706, such as for example, mounted on a top clamp plate, and not in heat conductive communication with the hot runner manifold 206.

Similar to the push/pull actuator 1728, the push/pull actuator 1730 is connected to a connector 1748 that is coupled to a proximal end of a first flexible cable 1748. The first flexible cable 1748 is a relatively short cable of less than or equal to about 1 foot in length. The first flexible cable 1748 includes a distal end interconnected to a distal end of a second flexible cable 1749 via a cable coupling 1750. The second flexible cable 1749 typically comprises a relatively long cable between about .5 and 10 feet in length. The second flexible cable 1749 is coupled at a proximal end to a ball screw linear actuator 1752 that generates linear motion, driven by an electric motor 1754 controlled by a controller 1746 (e.g., similar to the controller 132 of Fig. 1). Stated differently, the rotary motion generated by the electric motors 1754 is converted into linear motion by the ball screw linear actuator 1730. The ball screw linear actuator 1752 and the electric motor 1754 is mounted in a location that is remote from the hot runner manifold 1706 with the ball screw linear actuator 1752 remaining interconnected to the valve pin 1718 via the first flexible cable 1748 and second flexible cable 1749. Stated differently, a housing that houses the connection between the proximal end of the first flexible cable 1748 is mounted to the hot runner manifold 1706, while the rotary actuator 1752 and/or the electric motor 1754 is mounted elsewhere in a location that is remote from hot runner manifold 1706, such as for example, mounted on a top clamp plate, and not in heat conductive communication with the hot runner manifold 206. Hall effect sensors, illustrated at 1760 and 1762 function similar to the Hall effect sensors depicted in Fig. 2.

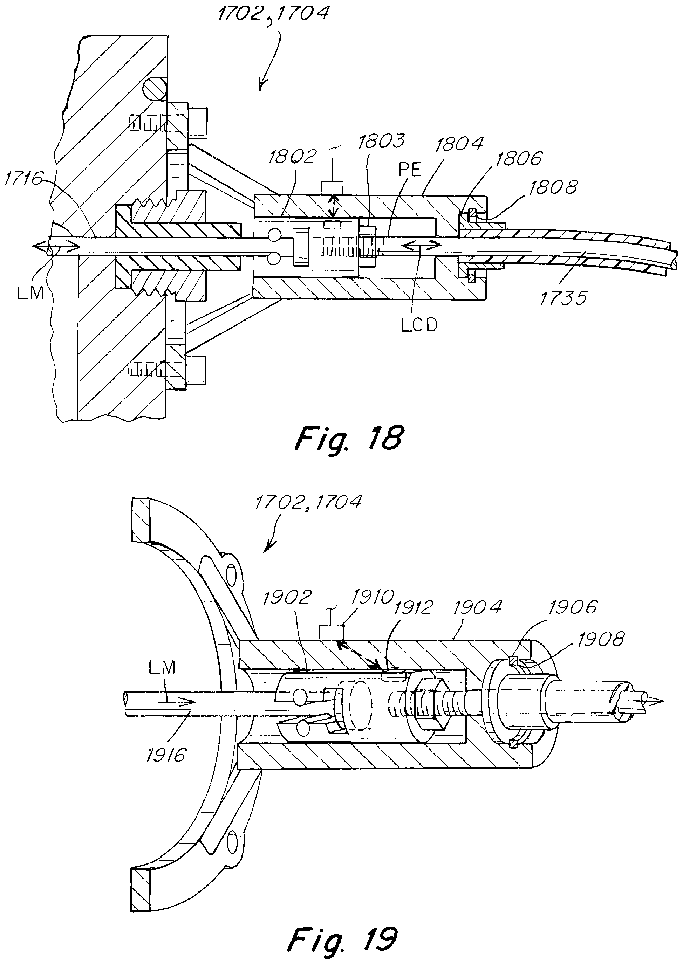

Figs. 18 and 19 provide a cross-sectional view and a partially broken view, respectively, of the push/pull actuators of Fig. 17. In the illustrated embodiments, the push/pull actuators 1702 and 1704 include anti-rotation flats or couplers 1802 and 1902 coupled to the bore and cylinder in a housing 1804 and 1904 of the push/pull actuators 1702 and/or 1704. The housing 1804 and 1904 of the push/pull actuators 1702 and 1704 further include a flange 1806 and 1906 and internal snap rings 1808 and 1908 that couple the flange 1806 and 1906 to the first and/or second flexible cables 1735, 1748 as illustrated in Fig. 17. A check nut 1803 rigidly couples the distal end of a flexible cable 1735 to the valve pin couplers 1802, 1902

A Hall effect sensor and magnet, illustrated at 1910 and 1912 may be coupled to a housing of the actuators 1702 and/or 1704. As explained above, the hall effect sensor 1910 and 1912 may be used to detect the position of the valve pin by detecting the strength, degree, and quality of a magnetic field generated by magnets 1914 and 1916 that varies with the linear position of the couplers and also the valve pins 1716, 1718 . Thus, the hall effect sensors 1910 and 1912 can be used to detect when the vale pins of the actuator 1702 and 1704 are in an opened or closed position or any position therebetween, as explained above in reference to Fig. 2.

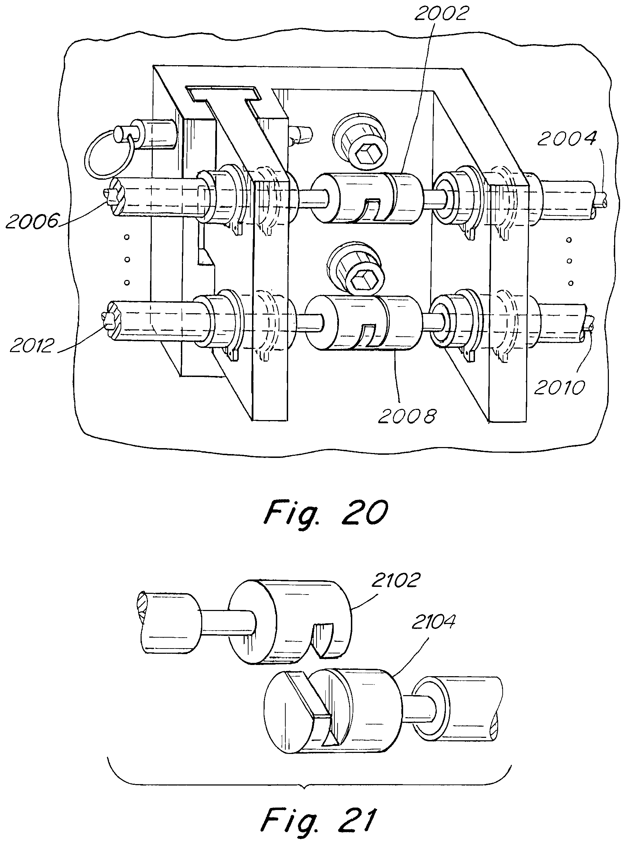

Fig. 20 is a perspective view of the cable couplings of Fig. 17 connecting first flexible cables to second flexible cables and thereby connecting ball screw actuators to push/pull actuators, as shown in Figs. 17 (only two couplings are shown for simplicity). As illustrated, a coupling 2002 is shown as a keyed connector, however, it is contemplated that a hex connector, spline connector, or other type of connector could be used. The coupling 2002 is connected to a terminal end of a first flexible cable 2004 and a terminal end of a second flexible cable 2006. Similarly, a coupling 2008 is connected to a terminal end of a first flexible cable 2010 and a terminal end of a second flexible cable 2012. The couplings 2002 and 2008 are adapted to accommodate linear movement generated by ball screw actuators (not shown) connected to the proximal ends of the second flexible cables 2006 and 20012.

Fig. 21 is an exploded perspective of the cable connectors 2002 and 2004 of Fig. 20. As illustrated, the connectors 2002 and 2004 include a keying member 2102 that cooperates with a keying element 2104 to enable the keying member to connect to the keying element 2104 when positioned in a predetermined orientation. Stated differently, the keying member 2102 prevents the cable connectors 2002 and 2004 from achieving a connection when the keying member 2102 and the keying element 2104 are not positioned in the predetermined orientation relative to each other. To mate, the keying element 2014 and the keying member 2012 must be aligned into the predetermined relative position. For example, the keying members/elements may be aligned by rotating the keying element 2104 relative to the mating connector.

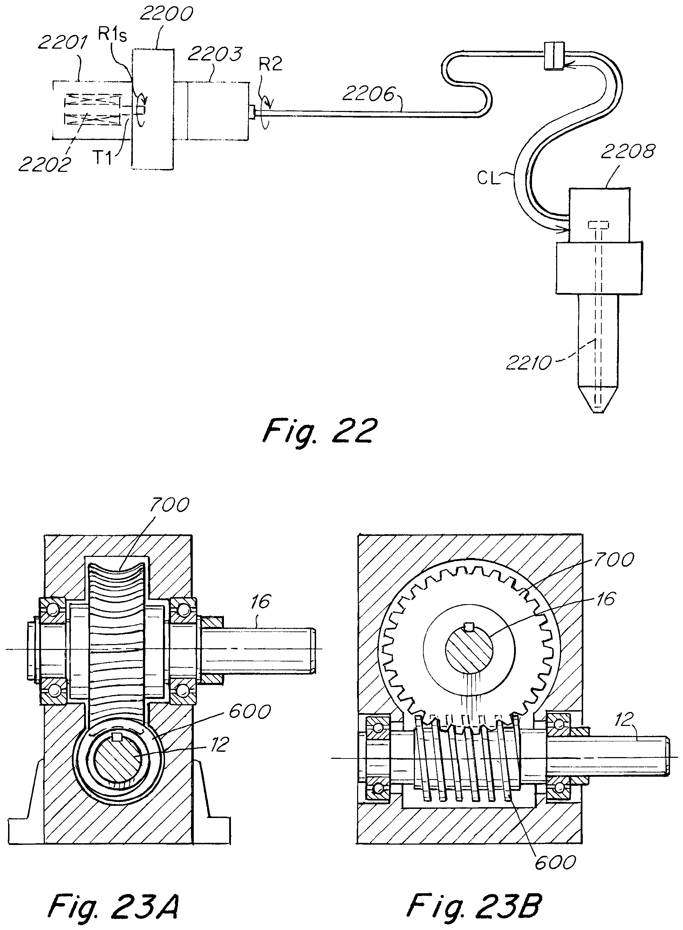

In an embodiment shown in schematic in Fig. 22, the electric motors (e.g., electric motors 244 of Fig. 2 and 1744 of Fig. 17) may be connected to a rotational speed changing or torque changing assembly 2200. In the illustrated embodiment, the rotational speed changing or torque changing assembly 2200 is connected between a rotor 2202 of an electrically powered motor 2201 and an actuator 2202 (e.g., the actuator 240 of Fig. 2 and 1740 of Fig. 7). The assembly 2200 is interconnected to the rotor 2202 in an arrangement that converts and transmits the rotational speed R1s and torque T1 of the rotor 2202 that is rotated by the assembly 2202 at a different, lower or higher speed, relative to the speed R1s and torque T1 of the motor 2201 or rotatably driven rotor 2202. The assembly 2202 is interconnected to the downstream end of an elongated cable 2206 in an arrangement where the rotational speed R3 is applied to the elongated flexible cable 2206, which in turn, is connected to an actuator and/or RTLM, illustrated at 2208, which is coupled to a valve pin 2210 (e.g., the valve pins of Figs. 2 and 17).

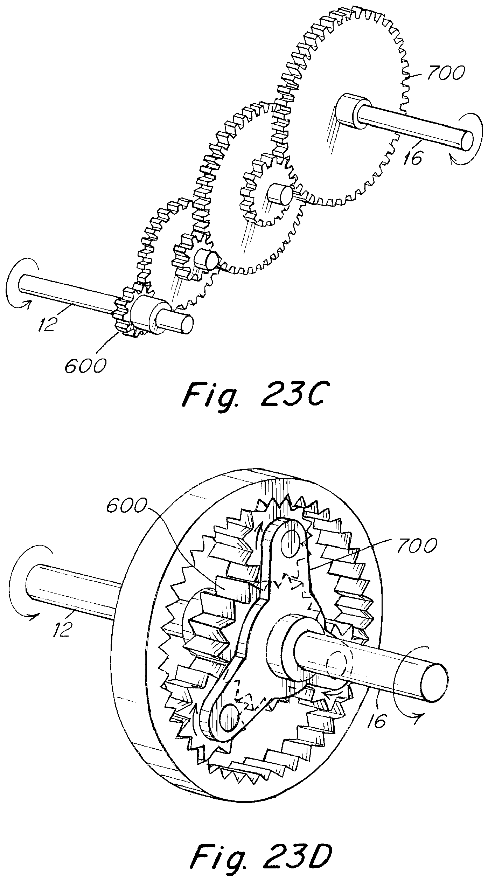

The rotational speed changing or torque changing assembly 2202 can comprise an assembly such as shown in Figs. 23A (worm gear assembly), 23B (spur gear assembly), 23C (planetary gear assembly) where the rotor 2202 of the motor 2201 is connected to and rotates the highest speed rotating gear or gear tooth containing component 600 of the assembly 2200 and the intermediate shaft is connected to and rotated by the highest rotating gear or gear tooth containing component 700 of the assembly 2200 to effectively reduce the rotational speed and increase the torque output of the rotor 2200 that is transmitted to the elongated flexible cable 2206. Other assemblies such as helical gear assemblies or belts and pulley arrangements and assemblies can be used to affect such speed changing and torque changing.

## Claims

1. An injection molding apparatus (100) comprising an injection molding machine (IMM), a heated manifold (206), a mold (203, 207) having a cavity (212), a downstream flow channel (220c) receiving a selected injection fluid from the heated manifold (206), the downstream flow channel routing the received selected injection fluid to a gate (215) that communicates with the cavity (212) of the mold, a valve pin (216, 218, 301, 501, 708, 808, 1222) adapted to be controllably driven upstream and downstream (LM) within the downstream flow channel (220c) between gate open and gate closed positions,
the apparatus includes an actuator (240, 252, 2202) interconnected to the valve pin (216, 218, 301, 501, 708, 808, 1222) via one or more elongated cables (237, 237, 248, 249) having a length (CL) and a cable axis (CA) wherein the one or more elongated cables are flexibly bendable along at least a portion of their axis (CA) into a curved or curvilinear configuration (CF),
the actuator (240, 252, 2202) being mounted and the length of the elongated cables (237, 237, 248, 249) being selected such that the actuator (240, 252, 2202) is mountable in a location relative to the manifold (206) wherein the actuator is insulated or isolated from significant or substantial heat conductive communication with the heated manifold (206),
the actuator (240, 252, 2202) and the valve pin (216, 218, 301, 501, 708, 808, 1222) being interconnected via the one or more elongated flexible cables (237, 237, 248, 249) in an arrangement such that the valve pin is controllably drivable by the one or more elongated flexible cables along a linear path of movement (LM) between the gate closed and gate open positions,
the actuator comprising an electrically powered motor having a rotatably driven rotor,
wherein the apparatus further comprises a rotary to linear motion converter (228, 230, 300, 700, 800, 1200, 1201, 2208) interconnected to a proximal end (PE) of the one or more elongated cables,
the rotor being interconnected to a distal end of the one or more elongated cables (237, 237, 248, 249) in an arrangement such that the one or more elongated cables are controllably rotatably (R, R2, R3) driven via controlled driven rotation (R) of the rotor around the rotor axis,
the rotary to linear motion converter including a drive member (304, 504, 704, 1224, 1506, 1606) interconnected to the proximal end of the one or more elongated cables (237, 237, 248, 249) in an arrangement wherein the drive member (304, 504, 704, 1224, 1506, 1606) is controllably driven along the path of linear movement (LM) by controllably driven rotation (R) of the one or more elongated cables (237, 237, 248, 249),
the drive member being interconnected to the valve pin in an arrangement wherein the valve pin is controllably drivable along the linear path of movement (LM) in unison with the drive member.

2. A method of carrying out an injection molding cycle comprising operating an apparatus according to claim 1.

## Patentansprüche

1. Spritzgießvorrichtung (100) mit einer Spritzgießmaschine (IMM), einem geheizten Verteiler (206), einer Form (203, 207) mit einem Hohlraum (212), einem stromabwärtsseitigen Strömungskanal (220c), der ein ausgewähltes Spritzgießfluid vom geheizten Verteiler (206) empfängt, wobei der stromabwärtsseitige Strömungskanal das empfangene ausgewählte Spritzgießfluid einem Angusskanal (215) zuführt, der mit dem Hohlraum (212) der Form kommuniziert, einem Ventilstift (216, 218, 301, 501, 708, 808, 1222), der dazu eingerichtet ist, innerhalb des stromabwärtsseitigen Strömungskanals (220c) zwischen einer Position, in der der Angusskanal offen ist, und einer Position, in der der Angusskanal geschlossen ist, stromaufwärts und stromabwärts steuerbar angetrieben zu werden (LM),
wobei die Vorrichtung einen Aktuator (240, 252, 2202) aufweist, der mit dem Ventilstift (216, 218, 301, 501, 708, 808, 1222) über ein oder mehrere längliche Kabel (237, 237, 248, 249) mit einer Länge (CL) und eine Kabelachse (CA) verbunden ist, wobei das eine oder die mehreren länglichen Kabel entlang mindestens eines Teils ihrer Achse (CA) flexibel in eine gekrümmte oder kurvenförmige Konfiguration (CF) gebogen werden können,
wobei der Aktuator (240, 252, 2202) derart montiert ist und die Länge der länglichen Kabel (237, 237, 248, 249) derart ausgewählt ist, dass der Aktuator (240, 252, 2202) an einer Stelle relativ zum Verteiler (206) montierbar ist, an der der Aktuator hinsichtlich einer signifikanten oder wesentlichen wärmeleitenden Verbindung mit dem geheizten Verteiler (206) isoliert oder getrennt ist,
wobei der Aktuator (240, 252, 2202) und der Ventilstift (216, 218, 301, 501, 708, 808, 1222) in einer Anordnung derart über das eine oder die mehreren länglichen flexiblen Kabel (237, 237, 248, 249) miteinander verbunden sind, dass der Ventilstift durch das eine oder die mehreren länglichen flexiblen Kabel entlang eines linearen Bewegungswegs (LM) zwischen der Position, in der der Angusskanal geschlossenen ist, und der Position steuerbar antreibbar ist, in der der Angusskanal offen ist,
wobei der Aktuator einen elektrisch angetriebenen Motor mit einem drehbar angetriebenen Rotor aufweist,
wobei die Vorrichtung ferner einen Rotations-Translations-Wandler (228, 230, 300, 700, 800, 1200, 1201, 2208) aufweist, der mit einem proximalen Ende (PE) des einen oder der mehreren länglichen Kabel verbunden ist,
wobei der Rotor mit dem einen oder den mehreren länglichen Kabeln (237, 237, 248, 249) in einer derartigen Anordnung verbunden ist, dass das eine oder die mehreren länglichen Kabel über eine gesteuerte angetriebene Drehbewegung (R) des Rotors um die Rotorachse steuerbar drehbar angetrieben werden (R, R2, R3),
wobei der Rotations-Translations-Wandler ein Antriebselement (304, 504, 704, 1224, 1506, 1606) aufweist, das mit dem proximalen Ende des einen oder der mehreren länglichen Kabel (237, 237, 248, 249) in einer Anordnung verbunden ist, bei der das Antriebselement (304, 504, 704, 1224, 1506, 1606) durch eine steuerbar angetriebene Drehbewegung (R) des einen oder der mehreren länglichen Kabel (237, 237, 248, 249) entlang des linearen Bewegungswegs (LM) steuerbar angetrieben wird,
wobei das Antriebselement mit dem Ventilstift in einer Anordnung verbunden ist, bei der der Ventilstift gemeinsam mit dem Antriebselement entlang des linearen Bewegungswegs (LM) steuerbar antreibbar ist.

2. Verfahren zum Ausführen eines Spritzgießzyklus, mit dem Betreiben einer Vorrichtung nach dem Anspruch 1.

## Revendications

1. Appareil de moulage par injection (100) comprenant une machine de moulage par injection (IMM), un collecteur chauffé (206), un moule (203, 207) présentant une cavité (212), un canal d'écoulement aval (220c) recevant un fluide d'injection sélectionné provenant du collecteur chauffé (206), le canal d'écoulement aval conduisant le fluide d'injection sélectionné reçu vers une porte (215) qui communique avec la cavité (212) du moule, une goupille de soupape (216, 218, 301, 501, 708, 808, 1222) conçue pour être entraînée de manière commandable vers l'amont et vers l'aval (LM) à l'intérieur du canal d'écoulement aval (220c) entre des positions de porte ouverte et de porte fermée,
l'appareil inclut un actionneur (240, 252, 2202) interconnecté à la goupille de soupape (216, 218, 301, 501, 708, 808, 1222) via un ou plusieurs câbles allongés (237, 237, 248, 249) présentant une longueur (CL) et un axe de câble (CA) où les un ou plusieurs câbles allongés sont pliables de manière flexible sur au moins une partie de leur axe (CA) selon une configuration incurvée ou curvilinéaire (CF),
l'actionneur (240, 252, 2202) étant monté et la longueur des câbles allongés (237, 237, 248, 249) étant sélectionnée de telle sorte que l'actionneur (240, 252, 2202) peut être monté à un emplacement par rapport au collecteur (206) où l'actionneur est isolé d'une communication thermoconductrice significative ou substantielle avec le collecteur chauffé (206),
l'actionneur (240, 252, 2202) et la goupille de soupape (216, 218, 301, 501, 708, 808, 1222) étant interconnectés via les un ou plusieurs câbles allongés flexibles (237, 237, 248, 249) selon un agencement tel que la goupille de soupape peut être entraînée de manière commandable par les un ou plusieurs câbles allongés flexibles le long d'un trajet de déplacement linéaire (LM) entre des positions de porte fermée et de porte ouverte,
l'actionneur comprenant un moteur alimenté électriquement présentant un rotor pouvant être entraîné en rotation,
dans lequel l'appareil comprend en outre un convertisseur de mouvement rotatif en mouvement linéaire (228, 230, 300, 700, 800, 1200, 1201, 2208) interconnecté à une extrémité proximale (PE) des un ou plusieurs câbles allongés,
le rotor étant interconnecté à une extrémité distale (DE) des un ou plusieurs câbles allongés (237, 237, 248, 249) selon un agencement tel que les un ou plusieurs câbles allongés peuvent être entraînés en rotation de manière commandable (R, R2, R3) via une rotation entraînée commandée (R) du rotor autour de l'axe de rotor,
le convertisseur de mouvement rotatif en mouvement linéaire incluant un élément d'entraînement (304, 504, 704, 1224, 1506, 1606) interconnecté à l'extrémité proximale des un ou plusieurs câbles allongés (237, 237, 248, 249) selon un agencement où l'élément d'entraînement (304, 504, 704, 1224, 1506, 1606) est entraîné de manière commandable le long du trajet de déplacement linéaire (LM) par une rotation entraînée de manière commandable (R) des un ou plusieurs câbles allongés (237, 237, 248, 249),
l'élément d'entraînement étant interconnecté à la goupille de soupape selon un agencement où la goupille de soupape peut être entraînée de manière commandable le long du trajet de déplacement linéaire (LM) à l'unisson avec l'élément d'entraînement.

2. Procédé de réalisation d'un cycle de moulage par injection comprenant le fait de mettre en œuvre un appareil selon la revendication 1.
